# EUROPEAN PATENT APPLICATION

(11) **EP 2 209 016 A1**
(43) Date of publication of application: **21.07.2010**
(21) Application number: 09305052.4
(22) Date of filing: 20.01.2009
(51) Int. Cl.: G01S 5/04

(54) **Localization method for mobile stations, receiver station and vehicle thereof**

(71) Applicant: Alcatel Lucent, 75008 Paris (FR)
(72) Inventor: Tangemann, Michael, 71229 Leonberg (DE); Pascht, Andreas, 73614 Schorndorf (DE)
(74) Representative: Brose, Gerhard

(57) **Abstract**

The invention relates to a method for localization of mobile stations, a receiver station (RS1) comprising an antenna array (AA1) with at least two antenna elements (AE1, AE2). The method comprises the step of calculating at the receiver station (RS1) a first receive direction (RD1) for at least a first uplink signal (ULS) received from a mobile station (MS) and for a first position (POS1) of the at least two antenna elements (AE1, AE2), wherein the method further comprises the steps of calculating at the receiver station (RS1) a second receive direction (RD2) for at least a second uplink signal (ULS) received from the mobile station (MS) and for a second position (POS2) of the at least two antenna elements (AE1, AE2), and calculating at the receiver station (RS1) a mobile station position (MSPOS) of the mobile station (MS) depending on the first and the second receive direction (RD1, RD2).

## Description

### FIELD OF THE INVENTION

The invention relates to a method for localization of mobile stations according to the preamble of claim 1, to a receiver station according to the preamble of claim 15, and to a vehicle according to the preamble of claim 17.

### BACKGROUND OF THE INVENTION

The market penetration of mobile stations containing a radio interface such as mobile phones, PDAs (PDA = personal digital assitant), notebooks etc. across the human population of industrial countries and also more often of developing countries is very high.

In case a mobile station, carried by a user, is not switched off, the mobile station transmits as uplink signals either user and signalling data during a connected mode or only signalling data during an idle mode.

The uplink signals can be used to locate the mobile station.

Especially in emergency situations, when a person is insensible or buried by an avalanche or by a collapsed building, the uplink signals sent by the mobile station can be used to find the person carrying the mobile station. GB 2 382 265 A discloses a mobile phone system, which can be used to facilitate emergency search and rescue of victims. An alert request signal from a survivor or a person not in danger is received at a mobile phone network and an alert message is broadcasted to a plurality of mobile stations to output an alert response to aid the location of a mobile station carried by a victim. The alert response is detected by a receiver, which comprises a directional antenna to determine a receiving direction of the alert response.

In EP 0 921 410 A2 a method for determination a reception direction is disclosed, which uses an antenna array at a base station to calculate an eigenvector, which indicates the DOA (DOA = direction of arrival), from which a signal is received with a largest signal strength.

The State Office of Criminal Investigation of Bavaria in Germany has developed a radio cell information system to locate mobile stations. Therefore, GPS data, radio cell IDs (ID = identifier), and signal strengths of radio cells in Bavaria have been measured and stored by driving with patrol cars across the radio cells. Signal strength values reported by a mobile station are compared with stored signal strength values to locate the mobile station.

Determining only a receiving direction of an uplink signal provides no detailed location data.

The method using the alert request signal requires a second person nearby the victim to initiate a search for the victim.

Using the radio cell information system requires to measure all radio cells of a radio communication system or even all radio cells again after a radio access technology upgrade.

Furthermore, not all areas of a radio cell (e.g. radio cell covers a part of a forest or a mountain) are easily accessible by patrol cars.

The way of using a receiver station for uplink signals of a mobile station affects the search duration and search accuracy to locate the mobile station. Therefore, it is the object of the invention to improve the localisation of mobile stations by using such a receiver station.

### SUMMARY OF THE INVENTION

This object is achieved by a method for localization of mobile stations, a receiver station comprising an antenna array with at least two antenna elements, the method comprising the step of calculating at the receiver station a first receive direction for at least a first uplink signal received from a mobile station and for a first position of the at least two antenna elements, wherein the method further comprises the steps of calculating at the receiver station a second receive direction for at least a second uplink signal received from the mobile station and for a second position of the at least two antenna elements, and calculating at the receiver station a mobile station position of the mobile station depending on the first and the second receive direction.

The object is further achieved by an independent claim 15 for a receiver station and by an independent claim 17 for a vehicle.

The method according to the present invention offers the benefit to calculate two receive directions at two different positions of the antenna elements of the antenna array.

This provides the advantage, that the two receiving directions can be used to calculate an intersection, where the mobile station is located. Therewith a higher precision in position determination can be achieved.

The higher precision in position determination provides a further advantage to find the victim in a shorter time, because a rescue team can immediately concentrate its search for the victim at the intersection of the two receiving directions and must not extend the search along the receive direction from the receiver station to the mobile station. A faster finding of the victim extends the chances of survival for the victim.

The invention does not require any action by a person located nearby the victim to start the localization procedure.

Furthermore, the invention does not require measuring all cells of a radio communication system or even all cells again after a radio access technology upgrade.

The antenna elements can provide the first and the second position when the antenna array position changes while the receiver station remains static or when the position of the antenna array changes together with the receiver station.

The first alternative provides the advantage, that no mechanism is required to move the whole receiver station, which usually exhibits a much larger mass than the antenna array with the antenna elements.

The second alternative provides the advantage, that the distance between the first position and the second position is not restricted to the length of the connection line between the receiver station and the antenna array. If the first position and the second position are chosen far enough from each other, a higher precision in localization of the mobile station can be achieved.

In a further embodiment of the invention, the antenna array comprises at least a third antenna element. This provides the benefit, that the first and the second position can be determined for different sets of antenna elements of the antenna array without required to move either the receiver station together with the antenna array or the antenna array, while the receiver station remains static.

The first and the second position can be determined via a global positioning system module to be included in the receiver station.

Using the global positioning system module, the first and the second position can be determined with high precision in a fast way especially if the receiver station is movable to variable locations.

In a preferred embodiment of the invention a first and a second receive plane are calculated and a first intersection line is determined for the first and the second receive plane. This provides the advantage, that the mobile station must be located within the first intersection line.

In a further preferred embodiment of the invention, the position of the mobile station is an intersection point of the first intersection line with a three-dimensional altitude profile of the Earth's surface.

All three coordinates of a three-dimensional space can be determined in that case for the mobile station. Therewith, the potential location of the mobile station is restricted to a very small area, in which the size of the area depends on the accuracy of the location determination.

In an even further preferred embodiment of the invention, a third receive plane of a third position of the antenna elements is used to calculate the mobile station position. Using the third receive plane a second intersection line of the third receive plane with the first or the second receive plane can be calculated. The second intersection line and the first intersection line are used to calculate an intersection point, where the mobile station is located. The even further preferred embodiment of the invention provides the benefit, that all three coordinates of a three-dimensional space for the mobile station position can be determined without using the three-dimensional altitude profile of the Earth's surface.

Further advantageous features of the invention are defined by dependent claims for the method and for the receiver station.

### BRIEF DESCRIPTION OF THE DRAWINGS

The embodiments of the invention will become apparent in the following detailed description and will be illustrated by accompanying drawings given by way of non-limiting illustrations.

Figure 1 shows a block diagram of a mobile station and a receiver station for performing a method in accordance to a first embodiment of the invention.

Figure 2 shows a two-dimensional geometrical drawing of an antenna array and receive directions in accordance to the first embodiment of the invention.

Figure 3 shows a flow diagram of the method in accordance to the first embodiment of the invention.

Figure 4 shows a block diagram of the mobile station, the receiver station and a vehicle in accordance to a first application of the first embodiment of the invention.

Figure 5 shows a block diagram of a receiver station in accordance to a second application of the first embodiment of the invention.

Figure 6 shows a block diagram of a receiver station in accordance to an application of a second embodiment of the invention.

Figure 7 shows a two-dimensional geometrical drawing of an antenna array and receive directions in accordance to the application of the second embodiment of the invention.

Figure 8 shows a flow diagram of the method in accordance to the second embodiment of the invention.

Figure 9 shows a three-dimensional geometrical drawing of an antenna array and receive directions in accordance to a third embodiment of the invention.

Figure 10 shows a flow diagram of the method in accordance to the third embodiment of the invention.

Figure 11 shows a flow diagram of the method in accordance to a fourth embodiment of the invention.

Figure 12 shows a three-dimensional geometrical drawing of an antenna array and receive directions in accordance to a first application of the fourth embodiment of the invention.

Figure 13 shows a block diagram of a receiver station in accordance to a second application of the fourth embodiment of the invention.

Figure 14 shows a block diagram of a radio communication system in accordance to a fifth embodiment of the invention.

Figure 15 shows a flow diagram of the method in accordance to the fifth embodiment of the invention.

Figure 16 shows a block diagram of a receiver station in accordance to the first, second, third, fourth, and fifth embodiment of the invention.

Figure 17 shows a block diagram of a vehicle in accordance to the first, second, third, fourth, and fifth embodiment of the invention.

### DETAILED DESCRIPTION OF THE INVENTION

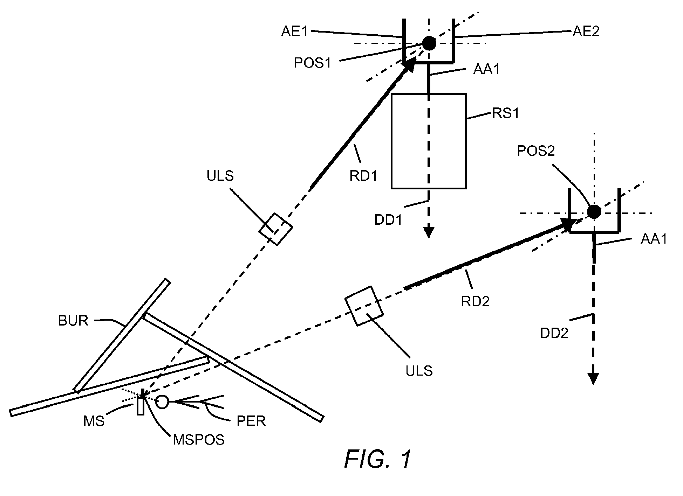

Referring to Figure 1 a user or a person PER carrying a mobile station MS is in a dangerous situation and is not able to get out of the situation by itself. The person PER is buried by a collapsed building BUR. In other dangerous situations, the person PER is buried by an avalanche or the person PER is not buried but is insensible or injured and is not able to move.

The term mobile station comprises all kind of mobile devices like for example mobile phones, PDAs (PDA = personal digital assitant), notebooks etc. containing at least one radio interface.

A receiver station RS1 comprises an antenna array AA1 with two antenna elements AE1, AE2. In an alternative, the antenna array AA1 contains more than two antenna elements. For the antenna array AA1 all kind of antenna arrays known in the art can be used.

The receiver station RS1 is a radio device comprising a receiver. The receiver station RS1 receives and processes uplink signals ULS from the mobile station MS and may or may not be adapted to further decode the uplink signals ULS.

In a first alternative, the receiver station RS1 comprises a transceiver for receiving and transmitting radio signals.

In a second alternative, the receiver station RS1 comprises at least some functions (e.g. for decoding the uplink signals ULS) compatible to a base station of a radio communication standard, which is used by the mobile station MS.

In a third alternative, the receiver station RS1 is a base station fully compatible to the radio communication standard of the mobile station MS. A central point of the antenna elements AE1, AE2 of the antenna array AA1 provides a first position POS1 (highlighted in the Figure 1 by a black dot) with a longitude value, a latitude value and an altitude value in a three-dimensional space.

In an alternative, the first position POS1 is provided by a central point of more than two antenna elements.

The identical aligned antenna elements AE1, AE2 provide at the first position POS1 a first dipole direction DD1. Preferably, the first dipole direction DD1 is parallel to the Earth's radius.

The antenna array AA1 is also shown at a different location, where the central point of the antenna elements AE1, AE2 of the antenna array AA1 provide a second position POS2 in the three-dimensional space.

At the second position POS2 the antenna elements AE1, AE2 provide a second dipole direction DD2.

The second dipole direction DD2 is parallel oriented to the first dipole direction DD1.

In an alternative, an angular between the first and the second dipole direction DD1, DD2 is larger than zero degree and smaller than ninety degree.

In a further alternative, the angular between the first and the second dipole direction DD1, DD2 is equal to ninety degree.

Uplink signals ULS are transmitted by the mobile station MS. The uplink signals ULS can be any kind of user data or signalling data and there is no requirement, that the uplink signals ULS are addressed to the receiver station RS1. The uplink signals ULS can be sent with any radio transmission technique know in the art.

The transmitted uplink signals ULS are received by the receiver station RS1, when the antenna elements AE1, AE2 of the receiver station RS1 are located at the first and the second position POS1, POS2.

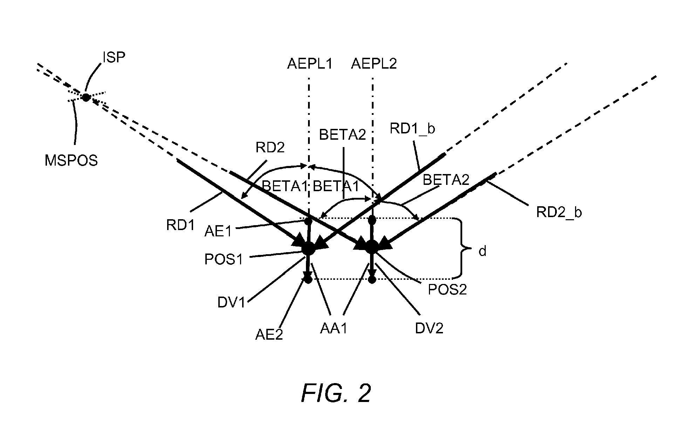

A first and a second receive direction RD1, RD2 of the uplink signals ULS at the first and the second position POS1, POS2 of the antenna elements AE1, AE2 are calculated at the receiver station RS1. The calculation will be further explained in relation with Figure 2.

The first and the second receive direction RD1, RD2 are used to calculate at the receiver station RS1 a mobile station position MSPOS, where the person PER and the mobile station MS are located.

Referring to Figure 2 a two-dimensional geometrical drawing of the antenna array AA1 and the receive directions RD1, RD2 are shown in a top view in accordance to the first embodiment of the invention.

The antenna elements AE1, AE2 of the antenna array AA1 provide at the first position POS1 a first distance vector DV1. A first antenna element plane AEPL1 contains the first distance vector DV1 and the first dipole direction DD1 (not shown in Figure 2).

The antenna elements AE1, AE2 of the antenna array AA1 provide at the second position POS2 a second distance vector DV2. A second antenna element plane AEPL2 contains the second distance vector DV2 and the second dipole direction DD2 (not shown in Figure 2).

The first and the second antenna element AE1, AE2 are separated at the first and the second position POS1, POS2 by a distance d.

The first receive direction RD1 is directed from the mobile station position MSPOS of the mobile station MS to the first position POS1 of the antenna elements AE1, AE2.

The second receive direction RD2 is directed from the mobile station position MSPOS of the mobile station MS to the second position POS2 of the antenna elements AE1, AE2.

Due to the symmetry of the antenna elements AE1, AE2 a first and a second virtual receive direction RD1_b, RD2_b are shown in addition to the first and the second receive direction RD1, RD2. If the antenna elements AE1, AE2 are covered on one half, no virtual receive directions can exist and in that case, it is not required to calculate the virtual receive directions RD1_b, RD2_b.

The first receive direction RD1 and the first virtual receive direction RD1_b provide a first angular BETA1 according to the first antenna element plane AEPL1.

The second receive direction RD2 and the second virtual receive direction RD2_b provide a second angular BETA2 according to the second antenna element plane AEPL2.

The first and the second receive direction RD1, RD2 intersect at an intersection point ISP. The intersection point ISP is equivalent to the mobile station position MSPOS of the mobile station MS.

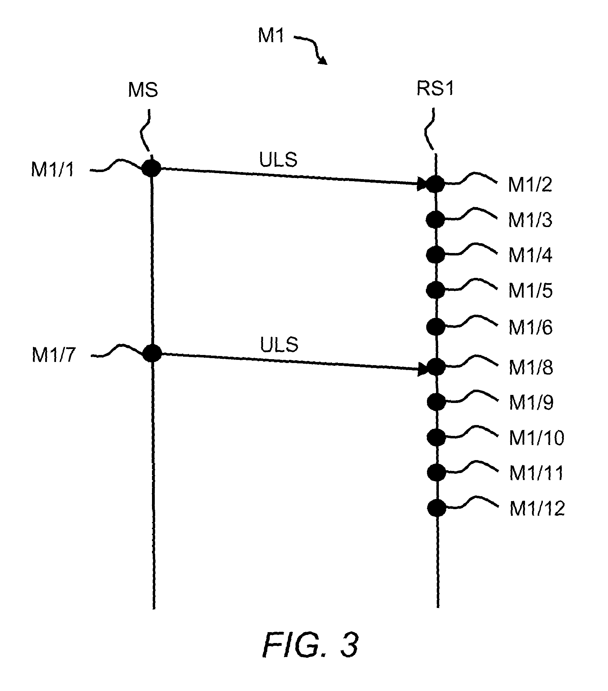

Referring to Figure 3 a flow diagram of a method M1 in accordance to a first embodiment of the invention is shown.

In a first step M1/1 the mobile station MS transmits an uplink signal ULS. The mobile station MS can also transmit more than one uplink signal.

The uplink signal ULS is transmitted due to a location update of the mobile station MS.

In an alternative, the uplink signal ULS is transmitted due to a service running on the mobile station MS, if the mobile station MS is connected to a radio communication system via a base station. This service can be for example a telephone call, if the person PER owning the mobile station MS is able to speak and is able to use the mobile station MS.

In a further alternative, the uplink signal ULS is transmitted periodically in response to periodic paging requests initiated by the radio communication system.

In a further step M1/2, the receiver station RS1 receives the uplink signal ULS.

In a next step M1/3, the receiver station RS1 processes the uplink signal ULS. The processing can be executed for example by a transceiver of the receiver station RS1.

In a further step M1/4, the receiver station RS1 determines the first position POS1 of the antenna elements AE1, AE2.

Therefore, the receiver station RS1 measures the first position POS1. The measurement is required, if the receiver station RS1 together with the antenna array AA1 are moved or only the antenna array AA1 is moved. The first position POS1 is measured for example using a global positioning system module in the receiver station RS1. The global positioning system module provides positioning data via a satellite navigation system as for example GPS (GPS = global positioning system) or Galileo (European system).

In an alternative a pressure sensor is used to measure the altitude value of the first position POS1, if the accuracy of the global positioning system module for the altitude value is not sufficient.

In a further alternative, the receiver station RS1 readouts the first position POS1 from a configuration file, if the receiver station RS1 is always located at a fixed location.

In a next step M1/5, the receiver station RS1 calculates first receive directions RD1, RD1_b for the uplink signal ULS and for the first position POS 1.

Therefore, the receiver station RS1 calculates the first angular BETA1.

The first angular BETA1 is calculated via a wavelength lambda of the uplink signal ULS, a phase difference DeltaPHI between the first and the second antenna element AE1, AE2 for the received uplink signal ULS, the mathematical constant PI, and the distance d between the first and the second antenna element AE1, AE2 using the following equation:

BETA1 = arccos ((Iambda*DeItaPHI)/(2*PI*d)).

Using this equation the receiver station RS1 must be able to measure the wavelength lambda or it must know the wavelength lambda. The receiver station RS1 can know the wavelength lambda, if the receiver station is a base station or the operator of the receiver station RS1 could know the wavelength lambda of the mobile station MS and inputs a value of the wavelength lambda to the algorithm of the receiver station RS1.

In an alternative, the first angular BETA1 is calculated via a time delay Delta_t given by a first reception time of the uplink signal ULS at the first antenna element AE1 and a second reception time of the uplink signal ULS at the second antenna element AE2, the distance d between the first and the second antenna element AE1, AE2, and a propagation velocity c of the uplink signal ULS using the following equation:

BETA1 = arccos ((Delta_t*c)/d).

In a further alternative, the receiver station RS1 calculates a first eigenvector according to a method known in the art, which indicates the DOA (DOA = direction of arrival) from which the uplink signal ULS is received with the largest signal strength.

In a next step M1/6, the antenna elements AE1, AE2 of the antenna array AA1 are moved to the second position POS2.

In a further step M1/7 the mobile station MS transmits a further uplink signal ULS.

In a next step M1/8 the receiver station RS1 receives the further uplink signal ULS.

In a further step M1/9 the receiver station RS1 processes the further uplink signal ULS.

In a next step M1/10, the receiver station RS1 determines the second position POS2 of the antenna elements AE1, AE2 in accordance to the same procedure as being used for the step M1/4.

In a further step M1/11, the receiver station RS1 calculates second receive directions RD2, RD2_b for the further uplink signal ULS and for the second position POS2 in accordance to the same procedure as being used for the step M 1/5.

In a further step M1/12, the receiver station RS1 calculates the mobile station position MSPOS of the mobile station MS using the intersection point ISP of the first receive directions RD1, RD1_b and the second receive directions RD2, RD2_b. Due to the geometry, there is only one intersection point of the first receive directions RD1, RD1_b and the second receive directions RD2, RD2_b as can be seen in Figure 2.

The sequence and the number of the steps for performing the method M1 is not critical, and as can be understood by those skilled in the art, that the sequence and the number of the steps may vary without departing from the scope of the invention.

The method according to the first embodiment of the invention offers the benefit to calculate two receive directions RD1, RD2 at two different positions POS1, POS2 of the antenna elements AE1, AE2 of the antenna array AA1.

This provides the advantage, that the two receiving directions RD1, RD2 can be used to calculate the intersection point ISP using triangulation. Therewith a higher precision in position determination of the mobile station MS can be achieved.

The higher precision in position determination provides a further advantage, that a rescue team can immediately concentrate its search for the person PER at the intersection point IPS and must not extend the search along the receive directions RD1 or RD2 from the receiver station RS1 to the mobile station MS. This provides the benefit to have a chance to find the person PER in a shorter time. A faster finding extends the chances of survival for the person PER.

The invention does not require any action by a person located nearby the victim to start the localization procedure.

Furthermore, the invention does not require measuring all radio cells of a radio communication system or even all cells again after a radio access technology upgrade to get a signal strength map of all radio cells for localization purposes.

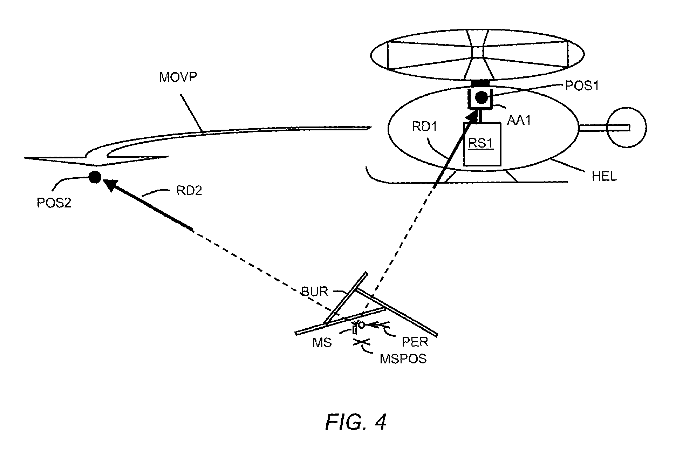

Referring to Figure 4, shows the mobile station MS, the receiver station RS1 and a vehicle HEL is shown in accordance to a first application of the first embodiment of the invention.

Preferably, the vehicle is a helicopter. Instead of the helicopter any kind of vehicle (car, bus, lorry, aeroplane, satellite, etc.) can be used, which is capable to carry the receiver station RS1.

In a further alternative, if the receiver station RS1 is not too heavy, the receiver station RS1 can be also carried by a person of a rescue team for example in a rucksack with the antenna array AA1 protruding from the rucksack.

The receiver station RS1 is located in the vehicle HEL to move the receiver station RS1 along a moving path MOVP to a different location.

The movement of the receiver station RS1 in a vehicle provides the advantage, that the distance between the first position POS1 and the second position POS2 is not restricted to the length of the connection line between the receiver station RS1 and the antenna array AA1 and therewith a higher precision in position determination of the mobile station position MSPOS of the mobile station MS can be achieved.

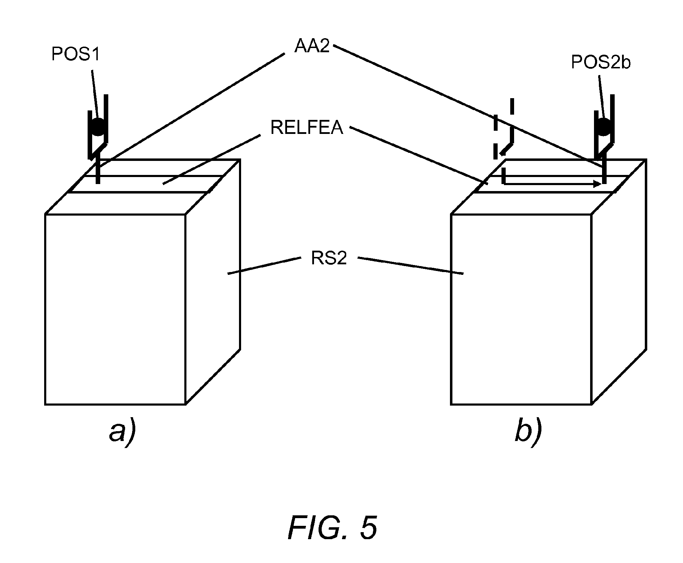

Referring to Figure 5, a receiver station RS2 in accordance to a second application of the first embodiment of the invention is shown. The receiver station RS2 comprises an antenna array AA2. The antenna array AA2 comprises two antenna elements AE1, AE2 and is mounted on a relocate feature RELFEA to move the antenna elements AE1, AE2 between the first and the second position POS1, POS2b.

In an alternative the relocate feature RELFEA can move the antenna elements AE1, AE2 between more than two positions.

The relocate feature RELFEA can be any kind of apparatus like for example a complex robot arm or a simple translation device as shown in the Figure 5.

The use of the relocate feature RELFEA provides the advantage, that no mechanism or vehicle is required to move the receiver station RS2, which usually exhibits a much larger mass than the antenna array AA2 with the antenna elements AE1, AE2.

The first and the second position POS1, POS2b can be read out from a configuration file. This provides the benefit, that the receiver station RS2 does not require a global positioning system module or a pressure sensor.

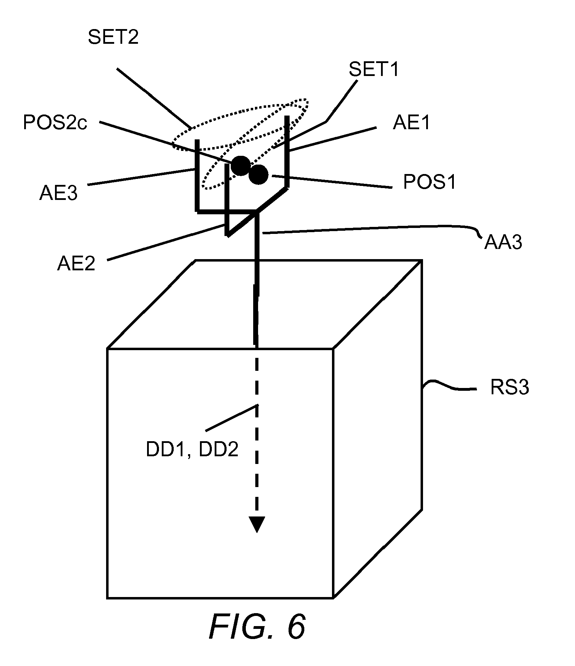

Referring to Figure 6, a receiver station RS3 in accordance to an application of a second embodiment of the invention is shown. The receiver station RS3 comprises an antenna array AA3. The antenna array AA3 comprises the first antenna element AE1, the second antenna element AE3, and a third antenna element AE3. The antenna elements AE1, AE2 add up to a first set of antenna elements SET1 and provide the first position POS1. The antenna elements AE1, AE3 add up to a second set of antenna elements SET2 and provide a second position POS2c.

In a preferred alternative, the antenna array AA3 is rotatable according to the dipole directions DD1, DD2, to optimize the received signal strength of the uplink signals ULS.

The uplink signals ULS are received at the first, the second, and the third antenna element AE1, AE2, and AE3. The algorithm for calculating the receive directions selects the first and the second set of antenna elements SET1, SET2 by restricting the processing of the received uplink signals only to the uplink signals received at the corresponding antenna elements of the first and the second set of antenna elements SET1, SET2.

In an alternative, the first and the second set of antenna elements SET1, SET2 are selected by disconnecting some of the antenna elements from a receiver via controlled switches.

The antenna elements of the first and the second set of antenna elements SET1, SET2 provide same dipole directions DD1, DD2. Preferably, the dipole directions DD1, DD2 are parallel to the Earth's radius.

The receiver station RS3 provides the advantage, that the antenna elements AE1, AE2, AE3 of the antenna array AA3 provide two positions POS1, POS2c without the requirement to move the antenna array AA3 or the receiver station RS3 together with the antenna array AA3.

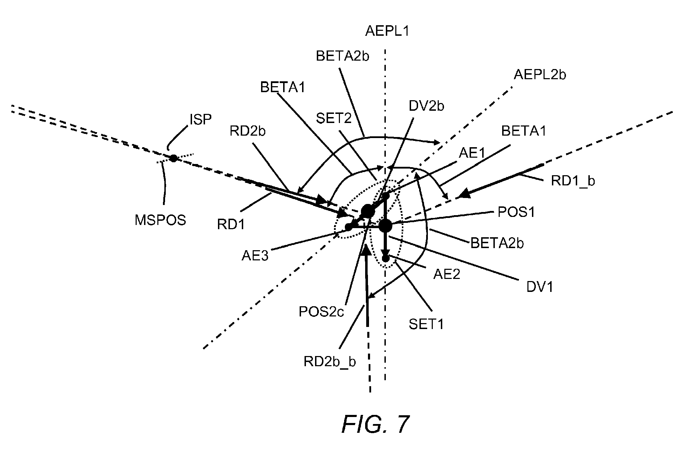

Referring to Figure 7 a two-dimensional geometrical drawing of the antenna array AA3 and receive directions RD1, RD1_b, RD2, RD2_b are shown in a top view in accordance to the application of the second embodiment of the invention.

For the first receive directions RD1, RD1_b the situation of the antenna elements AE1, AE2 are the same for the antenna arrays AA1, AA3 (see Figure 2).

A second antenna element plane AEPL2b is spanned by the dipole direction DD2 (not shown in Figure 7) and a second distance vector DV2b between the antenna elements AE1, AE3.

A second receive direction RD2b is directed from the mobile station position MSPOS of the mobile station MS to the second position POS2c of the antenna elements AE1, AE3. Due to the symmetry of the antenna elements AE1, AE3, a virtual second receive direction RD2b_b exists symmetrically on the other side of the second antenna element plane AEPL2b.

A second angular BETA2b is given between the second antenna element plane AEPL2b of the antenna elements AE1, AE3 and the second receive directions RD2b, RD2b_b.

The first receive direction RD1 and the second receive direction RD2b intersect at the intersection point ISP. The intersection point ISP is equivalent to the mobile station position MSPOS of the mobile station MS.

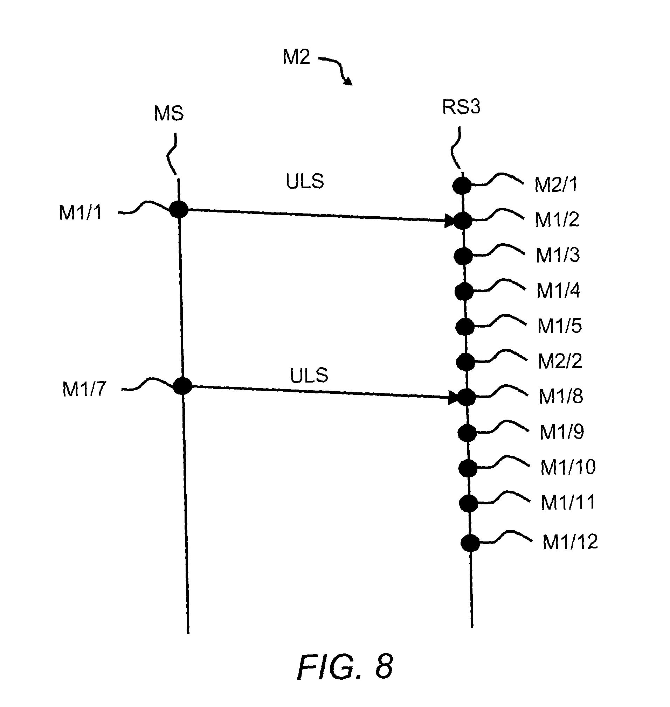

Referring to Figure 8 a flow diagram of a method M2 in accordance to the second embodiment of the invention is shown. In addition to the steps M1/1, M1/2, M1/3, M1/4, M1/5, M1/7, M1/8, M1/9, M1/10, M1/11, and

M1/12 performed in the first embodiment of the invention, step M2/1 is performed prior to the step M1/1 and step M2/2 is performed in place of the step M1/6.

In the further step M2/1, the receiver station RS3 selects the antenna elements AE1, AE2 for the first set of antenna elements SET1.

Therefore, the receiver station RS3 disconnects the electrical connection to the third antenna element AE3 for example by a switch.

In an alternative, the receiver station RS3 does not use the uplink signal ULS received via the third antenna element AE3 in the algorithm for calculating the first receive directions RD1, RD1_b.

In the step M2/2 the receiver station RS3 selects the antenna elements AE1, AE3 for the second set of antenna elements SET2 in accordance to the same procedure as being used for the step M2/1.

The sequence and the number of the steps for performing the method M2 is not critical, and as can be understood by those skilled in the art, that the sequence and the number of the steps may vary without departing from the scope of the invention.

Different sets SET1, SET2 of antenna elements provides the benefit, that neither the receiver station RS3 together with the antenna array AA3 nor the antenna array AA3 alone must be moved to get two different positions POS1, POS2c for the antenna elements.

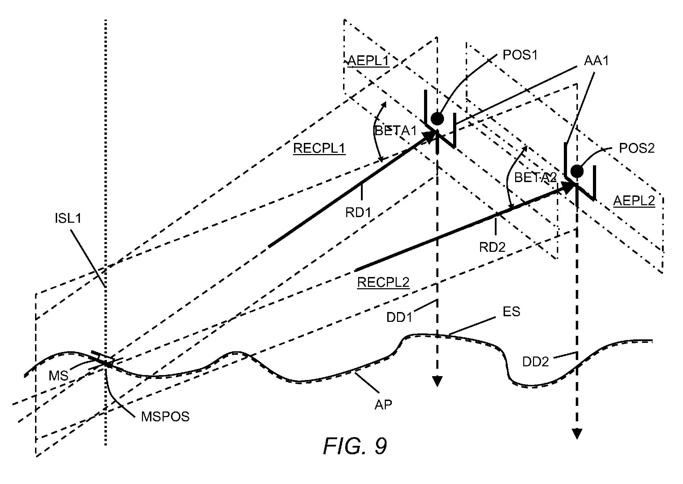

Referring to Figure 9, a three-dimensional geometrical exposition of the antenna array AA1 located at the first and the second position POS1, POS2 in accordance to a third embodiment of the invention is shown.

A first receive plane RECPL1 is spanned by the first dipole direction DD1 of the antenna elements AE1, AE2 and the first receive direction RD1 and a second receive plane RECPL2 is spanned by the second dipole direction DD2 of the antenna elements AE1, AE2 and the second receive direction RD2.

Preferably, the first dipole direction DD1 is parallel to the Earth's surface. The second dipole direction DD2 is parallel oriented to the first dipole direction DD1.

In an alternative, an angular between the first and the second dipole direction DD1, DD2 is larger than zero degree and smaller than ninety degree.

In a further alternative, the angular between the first and the second dipole direction DD1, DD2 is equal to ninety degree.

The first and the second receive plane RECPL1, RECPL2 intersect at a first intersection line ILS1.

The mobile station position MSPOS is located at the intersection point of the first intersection line ILS1 and the Earth's surface ES.

The Earth's surface ES has been measured and is digitized by a three-dimensional altitude profile AP. Preferably, the three-dimensional altitude profile AP is stored on a navigation system module of the receiver station RS1.

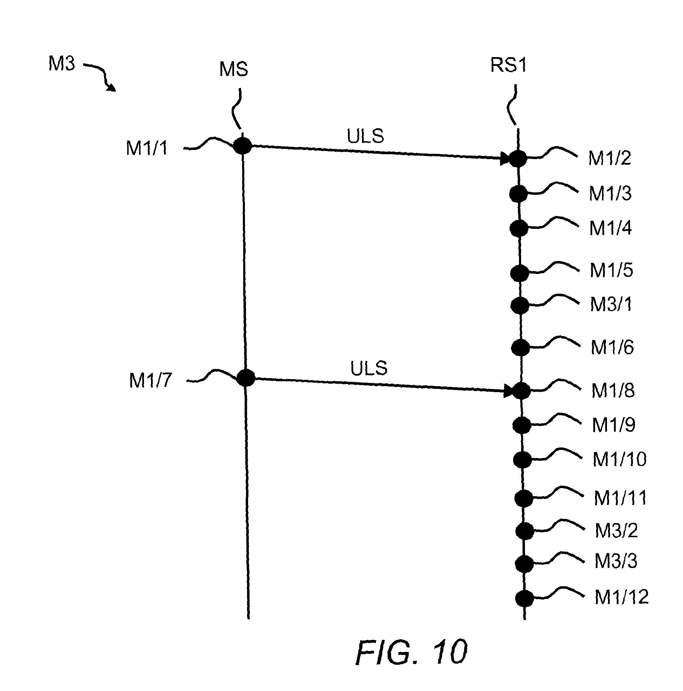

Referring to Figure 10 a flow diagram of a method M3 in accordance to the third embodiment of the invention is shown. In addition to the steps M1/1, M1/2, M1/3, M1/4, M1/5, M1/6, M1/7, M1/8, M1/9, M1/10, M1/11, and

M1/12 performed in the first embodiment of the invention, step M3/1 is performed between the step M1/5 and the step M1/6 and steps M3/2, M3/3 are performed between the step M1/11 and the step M1/12.

In the further step M3/1, the receiver station RS1 calculates the first receive plane RECPL1.

In the further step M3/2, the receiver station RS1 calculates the second receive plane RECPL2.

In the next step M3/3, the receiver station RS1 calculates the first intersection line ILS1 between the first and the second receive plane RECPL1, RECPL2.

In the step M1/12, the receiver station RS1 calculates the mobile station position MSPOS of the mobile station MS using an intersection point of the first intersection line ILS1 and the three-dimensional altitude profile AP.

The sequence and the number of the steps for performing the method M3 is not critical, and as can be understood by those skilled in the art, that the sequence and the number of the steps may vary without departing from the scope of the invention.

Using the three-dimensional altitude profile of the Earth's surface, the mobile station position MSPOS of the mobile station MS can be determined with high precision knowing its longitude, latitude, and altitude value.

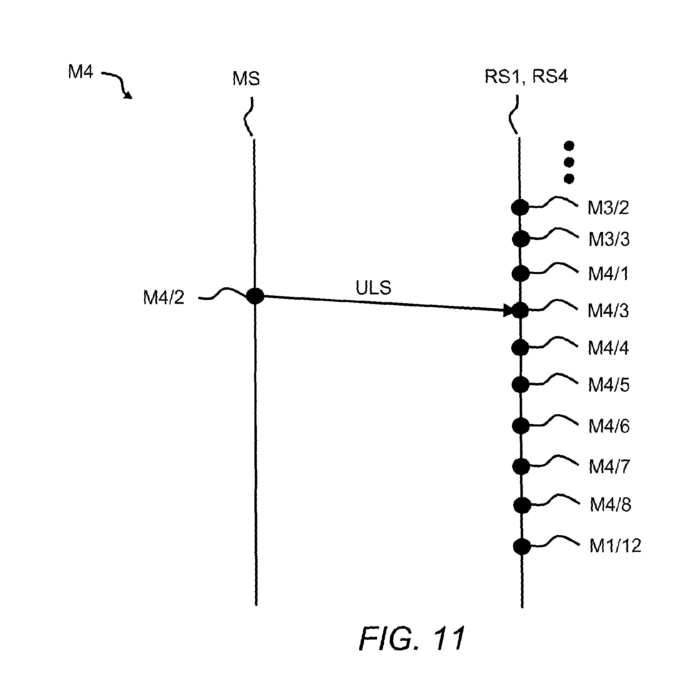

Referring to Figure 11a flow diagram of a method M4 in accordance to a fourth embodiment of the invention is shown. In addition to the steps M1/1, M1/2, M1/3, M1/4, M1/5, M3/1, M1/6, M1/7, M1/8, M1/9, M1/10, M1/11, M3/2, M3/3, and M1/12 performed in the third embodiment of the invention, steps M4/1, M4/2, M4/3, M4/4, M4/5, M4/6, M4/7, and M4/8 are performed between the step M3/3 and the step M1/12.

The three dots represent the steps M1/1, M1/2, M1/3, M1/4, M1/5, M3/1, M1/6, M1/7, M1/8, M1/9, M1/10, and M1/11 not shown in the Figure 11. In the further step M4/1, the receiver station RS1 together with the antenna elements AE1, AE2 of the antenna array AA1 are moved to a third position. In a first alternative (see Figure 5) only the antenna array AA2 of the receiver station RS2 is moved to a third position, while the receiver station RS2 remains static.

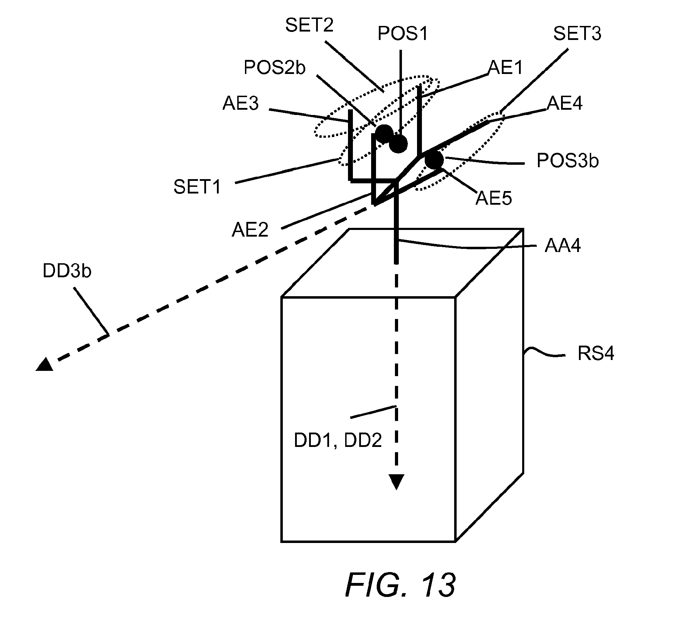

In a second alternative (see following Figure 13) the antenna array of a receiver station RS4 comprises at least five antenna elements and the third position is given by selecting two antenna elements not being used for the first and the second position POS1, POS2.

In the next step M4/2 the mobile station MS transmits an even further uplink signal ULS.

In the further step M4/3 the receiver station RS1, RS4 receives the even further uplink signal ULS.

In the next step M4/4 the receiver station RS1, RS4 processes the even further uplink signal ULS.

In the next step M4/5, the receiver station RS1, RS4 determines the third position of the antenna elements in accordance to the same procedure as being used for the step M1/4.

In a further step M4/6, the receiver station RS1, RS4 calculates a third receive direction for the even further uplink signal ULS and for the third position in accordance to the same procedure as being used for the step M1/5.

In the further step M4/7, the receiver station RS1, RS4 calculates a third second receive plane in accordance to the same procedure as being used for the step M3/2.

In the next step M4/8, the receiver station RS1, RS4 calculates a second intersection line between the third receive plane and the first or the second receive plane RECPL1, RECPL2.

In the step M/112, the receiver station RS1, RS4 calculates the mobile station position MSPOS of the mobile station MS using an intersection point of the first intersection line ILS1 and the second intersection line.

The sequence and the number of the steps for performing the method M4 is not critical, and as can be understood by those skilled in the art, that the sequence and the number of the steps may vary without departing from the scope of the invention.

Using the third position of the antenna array provides the benefit, that the mobile station position MSPOS of the mobile station MS can be determined with high precision not requiring an altitude profile of the Earth's surface.

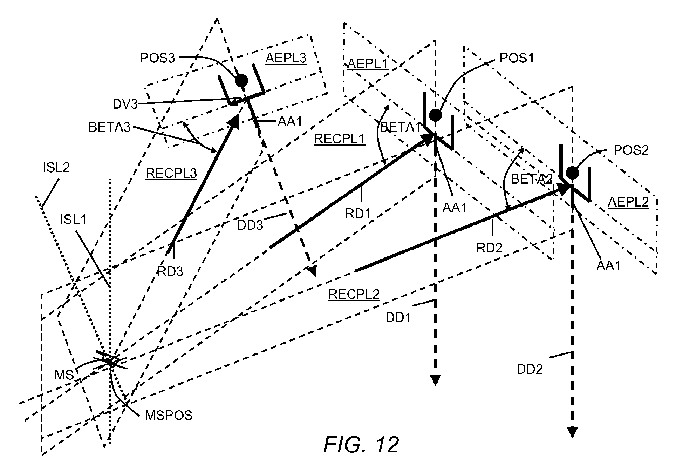

Referring to Figure 12, a three-dimensional geometrical drawing of the antenna array AA1 and the receive directions RD1, RD2 and a third receive direction RD3 in accordance to a first application of the fourth embodiment of the invention is shown.

The first and the second position POS1, POS2 of the antenna elements AE1, AE2 of the antenna array AA1 are the same as shown in Figure 9. The first and the second dipole direction DD1, DD2 are parallel oriented.

In comparison to Figure 9, the antenna elements AE1, AE2 of the antenna array AA1 are further shown at a third position POS3.

An angular between the third dipole direction DD3 and the first and the second dipole direction DD1, DD2 is larger than zero degree and smaller than ninety degree.

In an alternative, the angular between the third dipole direction DD3 and the first and the second dipole direction DD1, DD2 is equal to ninety degree.

The dipole directions DD1, DD2, DD3 are preferably measured by a ring laser gyroscope.

A third antenna element plane AEPL3 is spanned by the third dipole direction DD3 of the antenna elements AE1, AE2 and a third distance vector DV3 between the antenna elements AE1, AE2.

A third receive plane RECPL3 is spanned by the third dipole direction DD3 of the antenna elements AE1, AE2 and a third receive direction RD3 directed from the mobile station position MSPOS of the mobile station MS to the third position POS3.

A third angular BETA3 is given between the third antenna element plane AEPL3 and the third receive direction RD3.

The second and the third receive plane RECPL2, RECPL3 provide a second intersection line ILS2.

The mobile station position MSPOS is located at the intersection point of the first intersection line ILS1 and the second intersection line ILS2.

Moving the antenna array or even the receiver station with the antenna array to the third position POS3 provides the benefit, that the mobile station position MSPOS of the mobile station MS can be determined with high precision because the distance between the third position POS3 and the first and the second POS1, POS2 is not restricted to the length of the connection line between the antenna array AA1 and the receiver station RS1.

Referring to Figure 13 a receiver station RS4 is shown in accordance to a second application of the fourth embodiment of the invention.

The receiver station RS4 comprises an antenna array AA4.

The antenna array AA4 comprises five antenna elements AE1, AE2, AE3, AE4, and AE5. The antenna array AA4 can also comprise more than five antenna elements.

The first, the second, and the third antenna element AE1, AE2, AE3 have same dipole directions DD1, DD2.

In a preferred alternative, the antenna array AA4 is rotatable according to the dipole directions DD1, DD2 to optimise the received signal strength of the uplink signals ULS.

The fourth and the fifth antenna element AE4, AE5 provide a third dipole direction DD3b.

An angular between the third dipole direction DD3b and the first and the second dipole direction DD1, DD2 is larger than zero degree and smaller than ninety degree.

The first and the second antenna element AE1, AE2 add up to the first set of antenna elements SET1. The first and the third antenna element AE1, AE3 add up to the second set of antenna elements SET2. The fourth and the fifth antenna element AE4, AE5 add up to a third set of antenna elements SET3. The central point of the fourth and the fifth antenna element AE4, AE5 provides a third position POS3b.

Using at least five antenna elements at the antenna array AA4 provides the advantage, that the mobile station position MSPOS of the mobile station MS can be determined with higher precision in comparison to the antenna array AA3, which uses only three antenna elements.

Furthermore, it is not required to use a three-dimensional altitude profile of the Earth's surface.

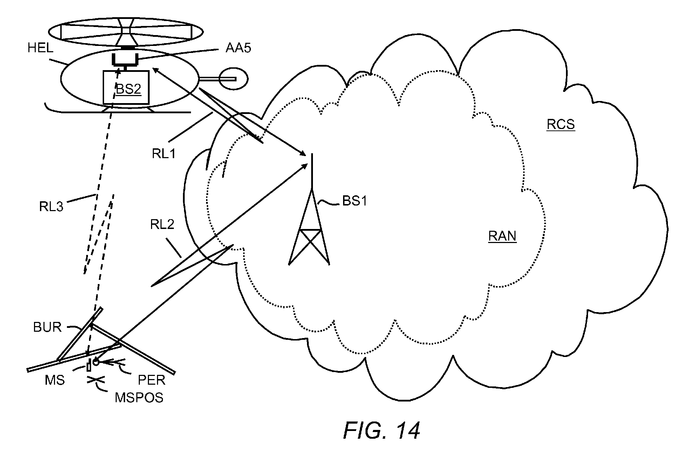

Referring to Figure 14, a radio communication system RCS in accordance to a fifth embodiment of the invention is shown.

The radio communication system RCS comprises a radio access network RAN. A radio access technology of the radio communication system RCS is a wide area radio communication technique such as LTE (LTE = Long Term Evolution).

In an alternative a local area radio communication technique such as IEEE 802.11n is used.

In principle, all radio access technologies known in the art can be used. The radio access network RAN comprises two base stations BS1, BS2. Further base stations of the radio access network RAN are not shown for simplification. The base stations BS1, BS2 are for example Enhanced Node Bs or 802.11 access points.

The first base station BS1 is a static terrestrial base station. The second base station BS2 with the antenna array AA5 is located inside a vehicle HEL. Preferably, the vehicle is a helicopter. Instead of the helicopter any kind of vehicle (car, bus, lorry, aeroplane, satellite, etc.) can be used, which is capable to carry the second base station BS2.

The helicopter flies across an area, where the person PER is supposed to be located.

Preferably, the antenna array AA5 is mounted outside the vehicle HEL.

The first base station BS1 communicates with the second base station BS2 via a first radio link RL1. Via the first radio link RL1, the second base station BS2 sends and receives information (e.g. a three-dimensional altitude profile of the area, where the person PER might be located) supporting the location algorithm of the second base station BS2 or information supporting and guiding a rescue team on the Earth's surface to locate the person PER. In an alternative, user data or standard specific signalling data are exchanged between the first and the second base station BS1, BS2.

In a further alternative, there exists no radio link between the first and the second base station BS1, BS2. In that case, the second base station BS2 is an autonomous base station of the radio communication system RCS.

The person PER, who is located at the mobile station position MSPOS and is buried by a collapsed building BUR, firstly communicates with the mobile station MS via the first base station BS1 and a second radio link RL2 (radio link with continuous line) between the mobile station MS and the first base station BS1.

After a handover, the person PER communicates with the mobile station MS via the second base station BS2 and the third radio link RL3 (radio link with dashed line).

Preferably, the mobile station MS comprises an antenna array with at least two antenna elements and contains an algorithm to estimate receiving directions of downlink signals of the second base station BS2. In that case, the mobile station MS can direct the radiation of the third radio link RL3 to the second base station BS2. Thereby, the reception power of the third radio link RL3 is increased at the second base station BS2 and the accuracy of the calculation of the mobile station position MSPOS can be optimised.

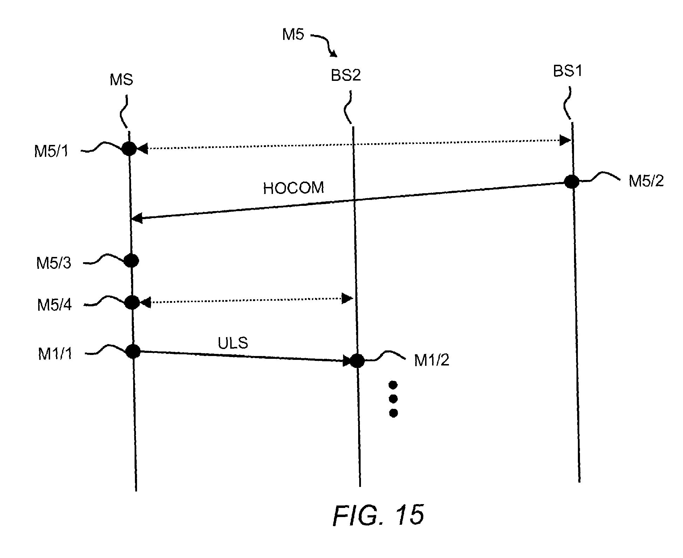

Referring to Figure 15 a flow diagram of a method M5 in accordance to the fifth embodiment of the invention is shown. In addition to the steps M1/1, M1/2, M1/3, M1/4, M1/5, M1/6, M1/7, M1/8, M1/9, M1/10, M1/11, and M1/12 performed in the first embodiment of the invention, steps M5/1, M5/2, M5/3, and M5/4 are performed before the step M1/1.

The three dots represent the steps M1/2, M1/3, M1/4, M1/5, M 1 /6, M1/7, M1/8, M1/9, M1/10, M1/11, and M1/12 not shown in the Figure 15. In the further step M5/1, the mobile station MS is in a connected mode with a user plane service and communicates with the radio communication system RCS via the first radio link RL1 and via the first base station BS1.

For example the person PER sends a distress call with the mobile station MS to its family members or to the police.

The radio communication system RCS preferably provides an emergency mode for users or persons who are in danger. If for example, the family members of the person PER report to the police that the person PER is missing, this information is received at the operator, who is operating the radio communication system RCS. Than the operator retrieves information like for example the IMSI (IMSI: International Mobile Subscriber Identity) of the mobile station MS of the person PER in order to be able to detect the radio cell, where the mobile station MS is located. If the mobile station MS is located in a radio cell of the first base station BS1 and if a vehicle HEL is sent to the area, where the person PER is supposed to be found, the operator can force a handover from the first base station BS1 to the second base station BS2 being located in the vehicle HEL.

Therefore, in the next step M5/2, the first base station BS1 transmits a handover command HOCOM to the mobile station MS.

In the further step M5/3, the mobile station MS reconfigures its physical and its link layer to build up a connection with the second base station BS2 via the third radio link RL3.

In the next step M5/4, the mobile station MS communicates via the third radio link RL3 and via the second base station BS2.

Preferably, data of the user plane service are forwarded by the second base station BS2 via the first radio link RL1 to the first base station BS1 and vice versa.

The sequence and the number of the steps for performing the method M5 is not critical, and as can be understood by those skilled in the art, that the sequence and the number of the steps may vary without departing from the scope of the invention.

The fifth embodiment of the invention provides the benefit, that the second base station BS2 for example is able to control the transmit power of the mobile station MS. If the transmit power of the mobile station MS is too low, to calculate the mobile station position MSPOS within a pre-defined accuracy the second base station BS2 can transmit a power control message to the mobile station MS to increase the transmit power.

If the mobile station MS comprises an antenna array with at least two antenna elements, the mobile station MS can direct the radiation of the third radio link RL3 to the second base station BS2. Thereby, the reception power of the third radio link RL3 is increased at the second base station BS2 and the accuracy of the calculation of the mobile station position MSPOS can be increased.

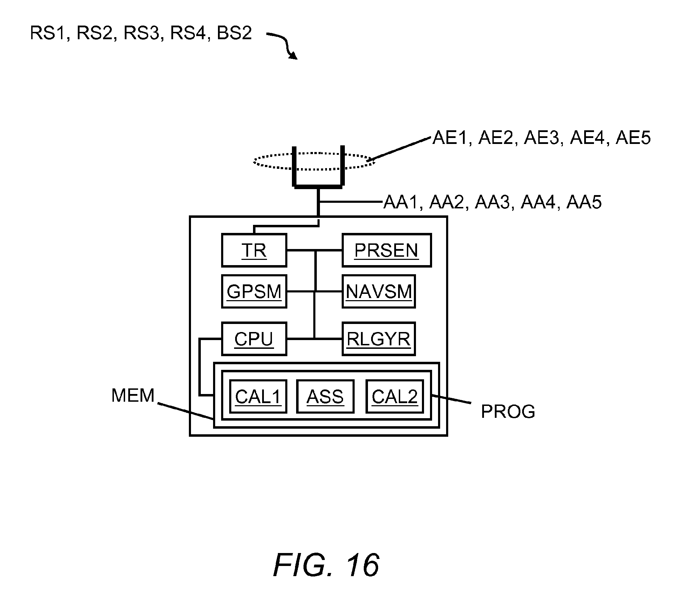

Referring to Figure 16, the receiver station RS1, RS2, RS3, RS4, BS2 contains the antenna array AA1, AA2, AA3, AA4, AA5 with at least two antenna elements AE1, AE2, AE3, AE4, AE5, a transceiver TR, a CPU (CPU = Central Processing Unit) CPU, a computer readable medium MEM, a global positioning system module GPSM, a navigation system module NAVSM, a pressure sensor PRSEN, and a ring laser gyroscope RLGYR.

In a first alternative, the receiver station RS1, RS2, RS3, RS4, BS2 is static. In that case, the receiver station RS1, RS2, RS3, RS4, BS2 does not contain the global positioning system module GPSM, the navigation system module NAVSM, the pressure sensor PRSEN, and the ring laser gyroscope RLGYR. In a second alternative, if the global positioning system module GPSM provides an altitude value with a pre-defined accuracy and the three-dimensional altitude profile of the earth's surface can be obtained via a wireless connection between the receiver station RS1, RS2, RS3, RS4, BS2 and a database of the radio communication system RCS, the receiver station RS1, RS2, RS3, RS4, BS2 does not contain the navigation system module NAVSM and the pressure sensor PRSEN.

In a third alternative, the receiver station RS1, RS2, RS3, RS4, BS2 contains a receiver instead of the transceiver.

The antenna array AA1, AA2, AA3, AA4, AA5 comprises at least two antenna elements AE1, AE2, AE3, AE4, AE5.

The transceiver TR receives the uplink signals ULS.

The computer readable medium MEM is foreseen for storing a computer readable program PROG. The CPU CPU is foreseen for executing the computer readable program PROG.

The computer readable program PROG is foreseen for executing steps of the method according to the first (see Figure 3), the second (see Figure 8), the third (see Figure 10), the fourth (see Figure 11), and/or the fifth (see Figure 15) embodiment of the invention.

The computer readable program PROG of the receiver station RS1, RS2, RS3, RS4, BS2 contains means CAL1 for calculating a receive direction for the uplink signals ULS, means ASS for associating a first receive direction RD1 respectively a second receive direction RD2 to the first position POS1 respectively the second position POS2, POS2b of the at least two antenna elements AE1, AE2, AE3, AE4, AE5, and means CAL2 for calculating the mobile station position MSPOS of the mobile station MS depending on the first and the second receive direction RD1, RD2.

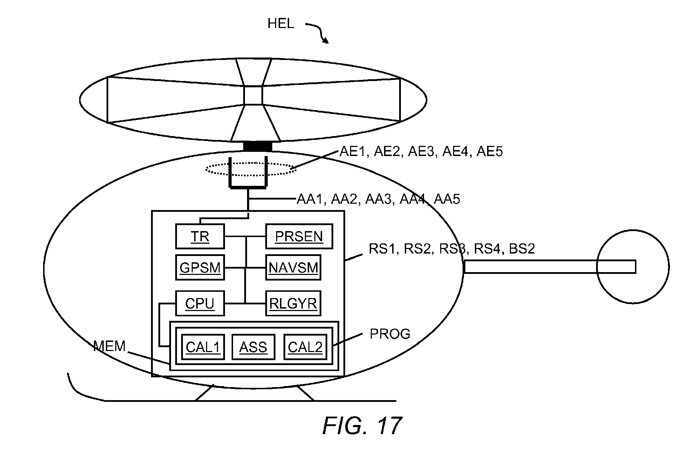

Referring to Figure 17, the vehicle HEL contains the receiver station RS1, RS2, RS3, RS4, BS2 with the antenna array AA1, AA2, AA3, AA4, AA5 and with the at least two antenna elements AE1, AE2, AE3, AE4, AE5.

The receiver station RS1 of the vehicle HEL further contains the transceiver TR, the CPU (CPU = Central Processing Unit) CPU, the computer readable medium MEM, the global positioning system module GPSM, the navigation system module NAVSM, the pressure sensor PRSEN, and the ring laser gyroscope RLGYR.

In an alternative, the navigation system module NAVSM is not required, if at least three receive directions have been calculated at three different positions (see Figure 12).

In a further alternative, the pressure sensor PRSEN is not required, if the altitude accuracy of the global positioning system module GPSM is sufficient for the localization method.

In an even further alternative, the ring laser gyroscope RLGYR is not required, if the vehicle HEL comprises a module for stabilization the orientation of the vehicle and therewith the dipole direction of the antenna elements according the direction of the Earth's radius.

The computer readable program PROG of the receiver station RS1, RS2, RS3, RS4, BS2 of the vehicle HEL contains means CAL1 for calculating a receive direction for the uplink signals ULS, means ASS for associating a first receive direction RD1 respectively a second receive direction RD2 to the first position POS1 respectively the second position POS2, POS2b of the at least two antenna elements AE1, AE2, AE3, AE4, AE5, and means CAL2 for calculating the mobile station position MSPOS of the mobile station MS depending on the first and the second receive direction RD1, RD2.

## Claims

1. A method for localization of mobile stations, a receiver station (RS1, RS2, RS3, RS4, BS2) comprising an antenna array (AA1, AA2, AA3, AA4, AA5) with at least two antenna elements (AE1, AE2, AE3, AE4, AE5), said method comprising the step of calculating (M1/5) at said receiver station (RS1, RS2, RS3, RS4, BS2) a first receive direction (RD1) for at least a first uplink signal (ULS) received from a mobile station (MS) and for a first position (POS1) of said at least two antenna elements (AE1, AE2, AE3, AE4, AE5),
**characterized in that** said method further comprises the steps of:
- calculating (M1/11) at said receiver station (RS1, RS2, RS3, RS4, BS2) a second receive direction (RD2) for at least a second uplink signal (ULS) received from said mobile station (MS) and for a second position (POS2, POS2b, POS2c) of said at least two antenna elements (AE1, AE2, AE3, AE4, AE5),
- and calculating (M1/12) at said receiver station (RS1, RS2, RS3, RS4, BS2) a mobile station position (MSPOS) of said mobile station (MS) depending on said first and said second receive direction (RD1, RD2).

2. The method according to claim 1, said method further comprises the step of determining (M1/4) at said receiver station (RS1, RS2, RS3, RS4, BS2) said first position (POS1) for said at least two antenna elements (AE1, AE2, AE3, AE4, AE5).

3. The method according to claim 2, said method further comprises the step of determining (M1/10) at said receiver station (RS1, RS2, RS3, RS4, BS2) said second position (POS2, POS2b) for said at least two antenna elements (AE1, AE2, AE3, AE4, AE5) upon moving of said at least two antenna elements (AE1, AE2, AE3, AE4, AE5).

4. The method according to claim 2, wherein said antenna array (AA3, AA4) comprises at least three antenna elements (AE1, AE2, AE3, AE4, AE5), wherein said first position (POS1) is determined for a first set (SET1) of said at least three antenna elements (AE1, AE2, AE3, AE4, AE5), and said method further comprises the steps of:
- selecting (M2/2) at said receiver station (RS3, RS4) a second set (SET2) of said at least three antenna elements (AE1, AE2, AE3, AE4, AE5),
- and determining (M1/10) at said receiver station (RS3, RS4) said second position (POS2c) for said second set (SET2) of said at least three antenna elements (AE1, AE2, AE3, AE4, AE5),
wherein said first set (SET1) and said second set (SET2) of said at least three antenna elements (AE1, AE2, AE3, AE4, AE5) comprising at least one different antenna element.

5. The method according to claim 1, wherein said first and said second position (POS1, POS2, POS2b, POS2c) being determined via a global positioning system module (GPSM).

6. The method according to claim 1, wherein said first and said second receive direction (RD1, RD2) are calculated via a phase difference of said at least two uplink signals (ULS) between a first one of said at least two antenna elements (AE1, AE2, AE3, AE4, AE5) and a second one of said at least two antenna elements (AE1, AE2, AE3, AE4, AE5).

7. The method according to claim 1, wherein said first and said second receive direction (RD1, RD2) are calculated via a delay time of said at least two uplink signals (ULS) between a first one of said at least two antenna elements (AE1, AE2, AE3, AE4, AE5) and a second one of said at least two antenna elements (AE1, AE2, AE3, AE4, AE5).

8. The method according to claim 1, said method further comprises the steps of:
- calculating (M3/1) at said receiver station (RS1, RS2, RS3, RS4, BS2) a first receive plane (RECPL1) spanned by a first dipole direction (DD1) of said at least two antenna elements (AE1, AE2, AE3, AE4, AE5) and said first receive direction (RD1),
- calculating (M3/2) at said receiver station (RS1, RS2, RS3, RS4, BS2) a second receive plane (RECPL2) spanned by a second dipole direction (DD2) of said at least two antenna elements (AE1, AE2, AE3, AE4, AE5) and said second receive direction (RD2),
- and calculating (M3/3) at said receiver station (RS1, RS2, RS3, RS4, BS2) a first intersection line (ILS1) of said first receive plane (RECPL1) and of said second receive plane (RECPL2).

9. The method according to claim 8, wherein said mobile station position (MSPOS) of said mobile station (MS) is an intersection point of said first intersection line (ILS1) with a three-dimensional altitude profile (AP) of the earth's surface (ES).

10. The method according to claim 9, wherein said three-dimensional altitude profile (AP) being determined via a navigation system module (NAVSM).

11. The method according to claim 8, said method further comprises the steps of:
- calculating (M4/7) at said receiver station (RS1, RS2, RS3, RS4, BS2) at least a third receive plane (RECPL3) spanned by at least a third dipole direction (DD3, DD3b) of said at least two antenna elements (AE1, AE2, AE3, AE4, AE5) and at least a third receive direction (RD3) for at least a third uplink signal (ULS) received from said mobile station (MS),
- and calculating (M4/8) at said receiver station (RS1, RS2, RS3, RS4, BS2) at least a second intersection line (ILS2) of one of said first and second receive planes (RECPL1, RECPL2) and of said at least third receive plane (RECPL3),
wherein said at least third dipole direction (DD3, DD3b) is not parallel to said first and said second dipole direction (DD1, DD2), and wherein said mobile station position (MSPOS) of said mobile station (MS) is an intersection point of said first intersection line (ILS1) and of said second intersection line (ILS2).

12. The method according to claim 11, wherein said first position (POS1), said second position (POS2), and said at least third position (POS3) are determined for said at least two antenna elements (AE1, AE2, AE3, AE4, AE5).

13. The method according to claim 11, wherein said antenna array (AA4) comprises at least five antenna elements (AE1, AE2, AE3, AE4, AE5), and wherein said first position (POS1), said second position (POS2b), and said at least third position (POS3b) are calculated for different sets (SET1, SET2, SET3) of said at least five antenna elements (AE1, AE2, AE3, AE4, AE5) comprising at least one different antenna element.

14. The method according to claim 1, said method further comprises the step of forcing (M5/2) a handover from a base station (BS1) of a radio communication system (RCS) to said receiver station (BS2).

15. A receiver station (RS1, RS2, RS3, RS4, BS2), said receiver station (RS1, RS2, RS3, RS4, BS2) comprising an antenna array (AA1, AA2, AA3, AA4, AA5) with at least two antenna elements (AE1, AE2, AE3, AE4, AE5), said receiver station (RS1, RS2, RS3, RS4, BS2) comprising means (CAL1) for calculating a receive direction for at least a received uplink signal (ULS),
**characterized in that** said receiver station (RS1, RS2, RS3, RS4, BS2) further comprises:
- means (ASS) for associating at least a first (RD1) respectively a second receive direction (RD2) to at least a first (POS1) respectively a second position (POS2, POS2b) of said at least two antenna elements (AE1, AE2, AE3, AE4, AE5),
- and means (CAL2) for calculating a mobile station position (MSPOS) of a mobile station (MS) depending on said first and said second receive direction (RD1, RD2).

16. The receiver station (RS1, RS2, RS3, RS4, BS2) according to claim 15, said receiver station (RS1, RS2, RS3, RS4, BS2) is a base station.

17. A vehicle (HEL) comprising a receiver station (RS1, RS2, RS3, RS4, BS2) with an antenna array (AA1, AA2, AA3, AA4, AA5) with at least two antenna elements (AE1, AE2, AE3, AE4, AE5), said vehicle (HEL) further comprising means (CAL1) for calculating a receive direction for at least a received uplink signal (ULS),
**characterized in that** said vehicle (HEL) further comprises:
- means (ASS) for associating at least a first (RD1) respectively a second receive direction (RD2) to at least a first (POS1) respectively a second position (POS2, POS2b) of said at least two antenna elements (AE1, AE2, AE3, AE4, AE5),
- and means (CAL2) for calculating a mobile station position (MSPOS) of a mobile station (MS) depending on said first and said second receive direction (RD1, RD2).
